# EUROPEAN PATENT SPECIFICATION

(11) **EP 1 411 114 B1**
(45) Date of publication and mention of the grant of the patent: **31.08.2005**
(21) Application number: 03380232.3
(22) Date of filing: 17.10.2003
(51) Int. Cl.: C12H 1/22, C12L 11/00, B27H 5/08

(54) **Machine for toasting wood casks**
Anlage zum Toasten von Holzfässern
Appareil pour grillage de barriques en bois

(30) Priority: 18.10.2002 ES 200202401
(43) Date of publication of application: 21.04.2004
(73) Proprietor: Uniriver Ebro, S.L., 01306 La Puebla de Labarca (Alava) (ES)
(72) Inventor: Echepare Fernandez, Enrique, 01306 La Puebla de Labarca (Alava) (ES)
(74) Representative: Urizar Anasagasti, Jesus Maria

(56) References cited:
- US-A- 2 185 206
- US-A- 5 331 133
- US-A- 5 630 265
- PATENT ABSTRACTS OF JAPAN vol. 2000, no. 05, 14 September 2000 (2000-09-14) & JP 2000 043007 A (SUNTORY LTD), 15 February 2000 (2000-02-15)

## Description

The present invention, as indicated by its title, refers to a machine specially designed for internally toasting a wood cask, preferably intended for ageing wines.

In order for the wine to obtain the desired aroma, refining and ageing, it must be introduced into oak casks for a time; during this phase, good flavors are revived and brought out, in contact with the wood, transforming into a quality wine. The toasting process serves to enhance the transfer of aroma and flavors to the wine.

US 5630265 discloses an apparatus for toasting wine barrels.

Currently, the cask toasting process is carried out by cooperage traditional methods and consists of burning oak wood inside of the cask, which is placed in a vertical position, turning it over at a point in the process for attempting to achieve a uniform toasting. The entire process is guided by the experience of the operator controlling it.

The machine of the present invention successfully resolves this drawback, since it allows controlling the toasting process at all times and achieving a not only uniform toasting over the entire internal surface of the cask, but also a homogenous toasting in the entire series of casks subjected to a toasting process under specific conditions, such that the wine contained in these casks will have very similar features.

This machine comprises a framework with a general "L"-shaped profile, the base of which is provided with respective pairs of wheels, assembled respectively on an idler shaft and a drive shaft, arranged in a hypothetical rectangle for supporting and rotating a cask on them which is placed laying on its side and aligned on the base of this framework. An arm is inserted inside the cask, and consequently, parallel to the base of the framework, which arm has a series of resistances assembled on a horizontal plane, facing the internal face of the cask, such that with them, as the cask rotates changing the surface facing the resistances, its internal face is uniformly heated and toasted.

This entire toasting process is controlled by a central processing unit which receives information about what is occurring inside the cask through an inwardly focused temperature sensor, such that the process can not only be programmed in terms of duration and temperature for achieving a desired toasting, but it also enables observing at all times its evolution in order to take corrective measures, if necessary, in certain conditions. A water sprayer, controlled by electrovalves with programming capacity, sprays the cask as it rotates, such that the inside of the cask is moistened, thereby contributing to enhancing the desired aromatic development.

These and other features of the present invention will be more easily understood with the aid of the following description, carried out according to a practical embodiment; this description is carried out according to the drawings of the attached plans, in which:

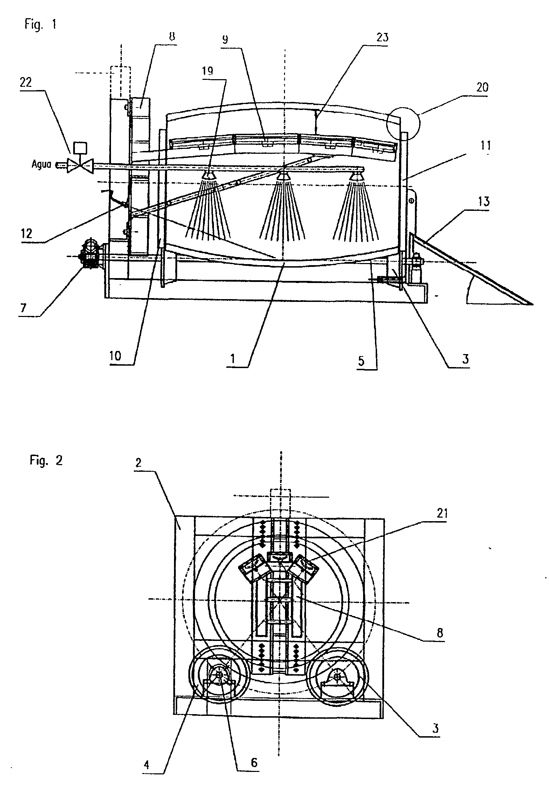

Figure 1 shows a profile view of a machine for toasting wood casks, carried out according to the present invention.
Figure 2 shows a side view of the previous machine.

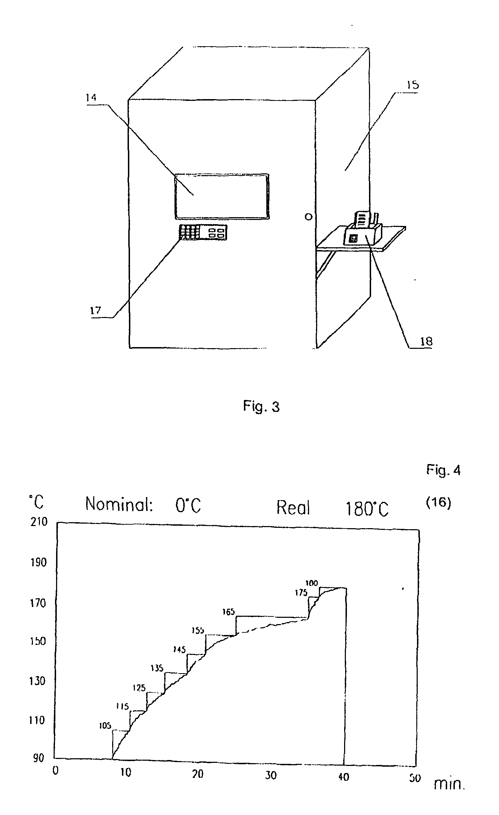

Figure 3 shows a schematic perspective view of the control center of the machine shown in the previous figures.
Figure 4 graphically shows the toasting process carried out (temperature-times).

This machine comprises a framework (2) having a general "L"-shaped configuration, the base of which is provided with: a first pair of wheels (3) assembled on an idler shaft (5), and a second drive shaft (6) parallel to the former, which is provided with respective wheels (4) on the ends, such that the assembly of wheels (3) and (4) forms four bearing points arranged in the corners of a rectangle, so that the cask (1) placed on said wheels (3) and (4) rests on them on the surface near its bases and, by means of actuating the geared motor (7), which drives the shaft (6), achieving the rotation of the cask (1) placed on its side on the base of the framework (2), where it has been placed by pushing it on a ramp (13) located at the free end of said framework.

The upright structure of the framework (2) has a vertically adjustable support (8) of an arm (9) located towards the center of the framework, which has a series of resistors assembled on a horizontal plane such that they are placed close to the internal face of the cask (1) to be toasted as it rotates, thereby achieving an adjustable, precise and homogenous toasting over its entire internal surface. The heating elements (21) are ceramic-type, infrared radiation elements and with a wavelength of 3 µm ± 0.2 µm, arranged at a minimum distance of 120 mm (23) from the internal surface of the cask.

A central, fixed cover (10) is also arranged on the upright structure of the framework (2), which cover is provided with elongated, vertical windows through which the support arm (9) of the resistors passes, in order to adjust to different heights according to the diameter of the cask to be toasted. On the opposite side and parallel to it, a movable cover (11) is arranged, preferably a collapsible cover to allow positioning the cask (1) on the framework (2) and subsequently placing it in a horizontal position, closing the bases of the cask (1) in conjunction with the cover (10) such that, since they are internally protected with a fire-resistant material, they allow achieving greater homogenization of the toasting temperatures and lower thermal leak while the process lasts.

Water spraying elements (19) are arranged positioned inside the cask (1), which act when the electrovalve (22), controlled by the central processing unit (15), opens.

The entire toasting process, in terms of temperature, cask rotation speed, time, proximity of the resistors to the internal face thereof, the amount of water to spray and the remaining variables, is controlled by a control unit included in the cabinet (15), which has a display (14) where the toasting process, sensed by a toasting temperature sensor (12) focused towards the inside of the cask, is visualized. This processing unit has a programming control (17) and a printer (18) for issuing a report or graph of the process (16) carried out. In the middle part of the framework and focused towards the center of the cask (1), a temperature sensor (12) is arranged, which transmits to the control center (15) all the necessary information about the internal area of the cask.

Toasting of wood casks can be carried out with this machine to obtain different wood toasting intensities-times, which has an influence on obtaining different organoleptic qualities.

## Claims

1. A machine for toasting wood casks, **characterized in that** it comprises a framework with an "L"-shaped profile, the structure of which is laterally provided with respective pairs of wheels (3-4), assembled respectively on an idler shaft (5) and on a drive shaft (6) driven by a geared motor (7), the wheels arranged so as to support and rotate on them a cask (1) laying on its side aligned on the base of the framework (2); also **characterized in that** the upright structure of said framework (2) has a vertically adjustable support (8) with a horizontal arm (9) on which a series of heating resistors are assembled, located towards the center of the framework such that they are positioned around the inside of the cask, close to its internal surface, in order to achieve the toasting of the cask progressively and uniformly by means of the rotating movement to which it is subjected while the process lasts.

2. A machine according to claim 1, **characterized in that** said framework (2) has, parallel to the upright structure, a fixed cover (10) parallel to another movable cover (11) arranged on the opposite end of the framework (2), both protected with a fire-resistant material and having a shape according to the openings of the cask (1), which openings they close, leaving upper windows (20), while the process lasts.

3. A machine according to claims 1 and 2, **characterized in that** the toasting temperature set in the resistors located on the arm (9), as well as the movement of the geared motor (7), which determines the rotation speed of the cask (1), or the height of the arm (9) carrying the resistors in their degree of approach to the surface of the cask, are all controlled by a central processing unit included in a cabinet (15), which allows programming all these variables.

4. A machine according to claims 1 to 3, **characterized in that** the middle part of the framework (2) is provided with a temperature detector (12), which transmits information about the central and internal area of the cask (1) to the control center (15).

5. A machine according to claims 1 to 4, **characterized in that** the heating elements (21) are ceramic-type, infrared radiation elements and with a wavelength of 3 µm ± 0.2 µm, arranged at a minimum distance from the internal surface of the cask.

6. A machine according to claims 1 to 5, **characterized in that** it has, internally to the cask (1), water sprayer elements (19) which act when the electrovalve (22) controlled by the central processing unit (15) opens, bringing about the spraying of water in order to contribute to enhancing the desired aromatic development.

## Patentansprüche

1. Maschine für das Rösten von Holzfässern, **dadurch gekennzeichnet, dass** sie einen Rahmen mit L-förmigem Profil umfasst, an dessen Verlauf seitlich jeweils ein Paar Räder (3-4) angeordnet sind, die jeweils an einer freibeweglichen Achse (5) und an einer Antriebsachse (6) montiert sind, die von einem Getriebemotor (7) angetrieben wird, wobei diese Räder dazu vorgesehen sind, um ein liegendes Fass (1), das auf dem Unterbau des Rahmens (2) ausgerichtet ist, zu tragen und auf ihnen zu drehen; außerdem ist sie **dadurch gekennzeichnet, dass** am senkrechten Abschnitt des genannten Rahmens (2) ein höhenverstellbarer Träger (8) mit einem waagerechten Arm (9) vorgesehen ist, an dem eine Reihe von Heizresistenzen montiert werden, die etwa im Zentrum des Rahmens angeordnet sind, so dass sie im Inneren des Fasses zu liegen kommen, in der Nähe der Innenfläche desselben, damit es zu einem fortschreitenden und gleichmäßigen Rösten des Fasses kommt, kraft der Drehbewegung, der das Fass während der Dauer des Vorgangs ausgesetzt ist.

2. Maschine nach Anspruch 1, **dadurch gekennzeichnet, dass** der genannte Rahmen (2) parallel zu dem senkrechten Abschnitt einen festen Deckel (10) aufweist, der parallel zu einem weiteren beweglichen Deckel (11) angeordnet ist, der am gegenüberliegenden Ende des Rahmens (2) vorgesehen ist, wobei beide durch ein feuerfestes Material geschützt sind und entsprechend den Öffnungen des Fasses (1) ausgebildet sind, die sie unter Freilassung von oben angeordneten Fenstern (20) während der Dauer des Vorgangs schließen.

3. Maschine nach den Ansprüchen 1 und 2, **dadurch gekennzeichnet, dass** die an den am Arm (9) angeordneten Heizresistenzen festgelegte Rösttemperatur, sowie die Bewegung des Getriebemotors (7), der die Drehgeschwindigkeit des Fasses (1) bestimmt, oder die Höhe des die Resistenzen tragenden Arms (9) hinsichtlich der Annäherung an die Oberfläche des Fasses sämtlich von einer zentralen Steuereinheit gesteuert sind, die in einem Schrank (15) angeordnet ist und eine Programmierung all dieser Variablen erlaubt.

4. Maschine nach den Ansprüchen 1 bis 3, **dadurch gekennzeichnet, dass** am mittleren Teil des Rahmens (2) ein Sensor (12) für die Temperaturmessung angeordnet ist, der der Steuerzentrale (15) Information über den zentralen und inneren Bereich des Fasses (1) übermittelt.

5. Maschine nach den Ansprüchen 1 bis 4, **dadurch gekennzeichnet, dass** es sich bei den Heizelementen (21) um solche keramischer Art handelt, mit Infrarotstrahlung und einer Wellenlänge von 3 µm ± 0,2 µm, die in einem Mindestabstand zur Innenfläche des Fasses angeordnet sind.

6. Maschine nach den Ansprüchen 1 bis 5, **dadurch gekennzeichnet, dass** diese im Inneren des Fasses (1) Wassersprühelemente (19) aufweist, die bei Öffnen des von der zentralen Steuereinheit (15) gesteuerten Elektroventils (22) betätigt werden, und das Zerstäuben von Wasser ermöglichen, um so dazu beizutragen, die gewünschte Aromaentwicklung zu verstärken.

## Revendications

1. Machine pour le grillage de barriques en bois, **caractérisée en ce qu'**elle comprend un bâti à profil en « L » dans la trame duquel sont disposées latéralement des paires de roues (3-4), montées respectivement dans un axe fou (5) et dans un autre menant (6) entraîné par un motoréducteur (7), disposées pour supporter et faire tourner sur elles une barrique (1) allongée et alignée sur la base du bâti (2) ; **caractérisée** également **en ce que** la trame verticale dudit bâti (2) présente un support réglable en hauteur (8) avec un bras horizontal (9) sur lequel sont montées une série de résistances chauffantes situées vers le centre du bâti de telle manière qu'elles se positionnent par l'intérieur de la barrique, proches de sa surface intérieure, pour obtenir le grillage de celle-ci de manière progressive et uniforme grâce au mouvement de rotation auquel elle est soumise pendant la durée du procédé.

2. Machine, selon la revendication 1, **caractérisé en ce que** ledit bâti (2) présente en parallèle à la trame verticale un couvercle fixe (10) parallèle à l'autre couvercle mobile (11) disposé à l'extrémité opposée du bâti (2), les deux étant protégés par une matière ignifuge, et conformément aux embouchures de la barrique (1) qui se ferment en laissant des fenêtres supérieures (20) pendant la durée du procédé.

3. Machine, selon les revendications 1 et 2, **caractérisé en ce que** la température de grillage établie dans les résistances situées sur les bras (9), ainsi que le mouvement du motoréducteur (7) qui détermine la vitesse de rotation de la barrique (1) ou la hauteur du bras (9) porteur des résistances lors de son procédé d'approchement de la surface de la barrique, tous ceux-ci étant pilotés par une unité centrale de commande incluse dans une armoire (15) qui admet une programmation de toutes ces variables.

4. Machine, selon les revendications 1 à 3, **caractérisée en ce que** sur la partie médiane du bâti (2) elle présente un capteur de détection de température (12), qui transmet au centre de commande (15) de l'information relative à la zone centrale et intérieure de la barrique (1).

5. Machine, selon les revendications 1 à 4, **caractérisée en ce que** les éléments chauffants (21) sont du type céramique, à rayonnement infrarouge et à longueur d'onde de 3 µn ± 0,2 µn, disposée à une distance minimale de la surface intérieure de la barrique.

6. Machine, selon les revendications 1 à 5 **caractérisée en ce qu'**elle présente à l'intérieur de la barrique (1) des éléments asperseurs d'eau (19), qui agissent lors de l'ouverture de l'électrovanne (22) pilotée par l'unité centrale de commande (15), en favorisant la pulvérisation d'eau pour contribuer à faciliter le développement aromatique souhaité.
